# EUROPEAN PATENT APPLICATION

(11) **EP 2 650 804 A1**
(43) Date of publication of application: **16.10.2013**
(21) Application number: 13163462.8
(22) Date of filing: 12.04.2013
(51) Int. Cl.: G06F 17/30, G06Q 30/06

(54) **Visual clustering method**

(30) Priority: 12.04.2012 US 201261623549 P
(71) Applicant: Rathod, Nainesh B., West Lafayette, IN 47906 (US); Tan, Jamie, West Lafayette, IN 47906 (US)
(72) Inventor: Rathod, Nainesh B., West Lafayette, IN 47906 (US); Tan, Jamie, West Lafayette, IN 47906 (US)
(74) Representative: Carpintero Lopez, Francisco

(57) **Abstract**

A method of visually clustering a database of component parts includes indexing a set of image data associated with the component parts, and storing the indexed image data in the database. The indexed image data is clustered dependent upon a visual criterion.

## Description

### BACKGROUND

### 1. Field of the Invention.

The present invention relates to computer search engines, and, more particularly, to computer search engines that enable a user to search based on visual features.

### 2. Description of the Related Art.

It is known for users of a computer search engine to provide the engine with one or more textual attributes of the part being searched for, and the engine returns and displays to the user all parts that have all the listed features. A problem is that if the user does not fully understand and correctly select all the textual feature options that are presented to him, then the search engine will not include in the search results the parts that the user is really interested in. Another problem is that the user does not know how many parts in the database have the features that the user desires, and thus the user may not know how many features to include in the search criteria in order to obtain a good number of parts in the search results.

### SUMMARY OF THE INVENTION

The present invention provides a computer search engine system that present search results to a user in clusters having common visual features. Thus, the user may quickly and reliably identify clusters of parts having the visual features in which he is interested. The user may then further refine the search results by providing textual features of the part in which he is interested.

The invention comprises, in one form thereof, a method of visually clustering a database of component parts, including indexing a set of image data associated with the component parts. The indexed image data is stored in the database. The indexed image data is clustered dependent upon a visual criterion.

The invention comprises, in another form thereof, a method of operating a search engine for component parts, including indexing image data associated with the component parts. The indexed image data is stored in a database. The indexed image data is clustered into visual families dependent upon a visual criterion. Images are displayed based on the indexed image data. The images are displayed in clusters of the component parts based on the clustering step.

The invention comprises, in yet another form thereof, a method of operating a search engine for component parts, including indexing image data associated with the component parts. The indexed image data is clustered dependent upon a visual criterion. Images are displayed based on the indexed image data. The images are displayed in clusters of the component parts based on the clustering step. Each cluster includes a plurality of sub-clusters of the component parts. A respective number is displayed in association with each cluster. Each number indicates how many sub-clusters are included in each associated cluster.

An advantage of the invention is that the user can search for a desired component part in an intuitive manner by selecting categories of parts that visually resemble the desired part.

Another advantage is that the component parts may be automatically identified by type based on their appearance and organized in clusters without a textual description having to be provided for each part.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:

FIG. 1a is a block diagram of one embodiment of a search engine arrangement of the present invention;

FIG. 1b is a block diagram of one embodiment of an image data indexing method of the present invention;

FIG. 1c is a flow chart of one embodiment of a search method of the present invention.

FIG. 1d is a front view of the mobile device of the arrangement of FIG. 1 wherein the user interface enables a user to select a type of part to be searched for;

FIG. 2 illustrates the types of fittings in the database of the arrangement of FIG. 1;

FIG. 3 illustrates the types of elbow fittings in the database;

FIG. 4 illustrates the types of ninety degree street elbow fittings in the database;

FIG. 5 illustrates the ninety degree street elbow fittings in the database that are made of black forged steel; and

FIG. 6 illustrates one particular ninety degree street elbow fitting that has been selected by the user.

Although the exemplification set out herein illustrates embodiments of the invention, in several forms, the embodiments disclosed below are not intended to be exhaustive or to be construed as limiting the scope of the invention to the precise forms disclosed.

### DESCRIPTION OF THE PRESENT INVENTION

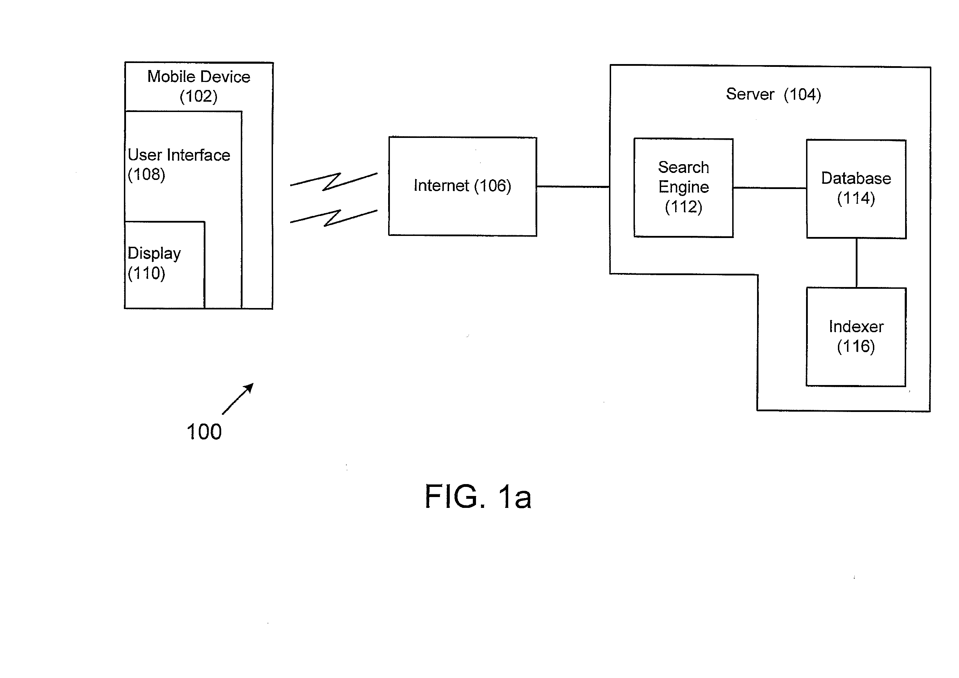

In one embodiment, the invention may be applied to a search engine that may search for images of two or more dimensions. One specific embodiment of a search engine arrangement 100 of the present invention is illustrated in FIG. 1a. Arrangement 100 includes a mobile electronic telecommunication device 102 in communication with a server 104 via the Internet 106. Device 102 may be a smartphone, similar to those marketed by Samsung Electronics Co., Ltd. (e.g., Galaxy) and Apple Inc. (e.g., iPhone), and may include a user interface 108 having a display 110, as is well known. Server 104 may include a search engine 112, a database 114 and an indexer 116. Database 114 may store images, image data, and other data and information associated with a collection of component parts.

The information about the components parts stored in database 114 may include features that may be ascertained visually, or based on the appearance of the part, such as the type, size and/or shape of the part. However, the ascertainment of the visual features need not be performed by a human. Rather, indexer 116 may automatically analyze image data of the parts in order to categorize the part or determine their types. Techniques by which part image data may be automatically analyzed in order to categorize the parts and organize the parts into clusters are disclosed in U.S. Patent Pub. No. 20030103673, entitled "Shape searcher", U.S. Patent Pub. No. 20100076959, entitled "METHODS FOR RETRIEVING SHAPES AND DRAWINGS", U.S. Patent Pub. No. 20060114252, entitled "Methods for retrieving shapes and drawings", U.S. Patent Pub. No. 20040249809, entitled "Methods, systems, and data structures for performing searches on three dimensional objects", and U.S. Patent Pub. No. 20030103089, entitled "Systems and methods for collaborative shape design", the disclosures of which are incorporated by reference herein in their entireties.

Indexing engine 116 may extract shape signatures from sets of files (e.g., sketches, images, 2D drawings and 3D models) which contain shape representations of parts or objects. Indexer 116 may then cluster the files based on the visual family characteristics or rules defined for clustering or grouping of a set of visual attributes (e.g., geometry or shape) based on a similarity threshold. This visually clustered information, which may be referred to as visual family, may then be used during a search. For example, when a shape input (e.g., an image, 2D drawing or 3D model) is provided for as input for a search, search engine 112 may match this shape input data against the visual family to obtain a match and may display a representative part/object from the visual family. The user can also navigate based on selecting a visual family and then drilling down to further sub-visual attribute clusters under the parent visual family until visual attributes are exhausted and text attributes can be combined to provide further filters to accurately reach the desired part/object. The user interface through a web browser or mobile device communicates with the server, where the indexed information is stored.

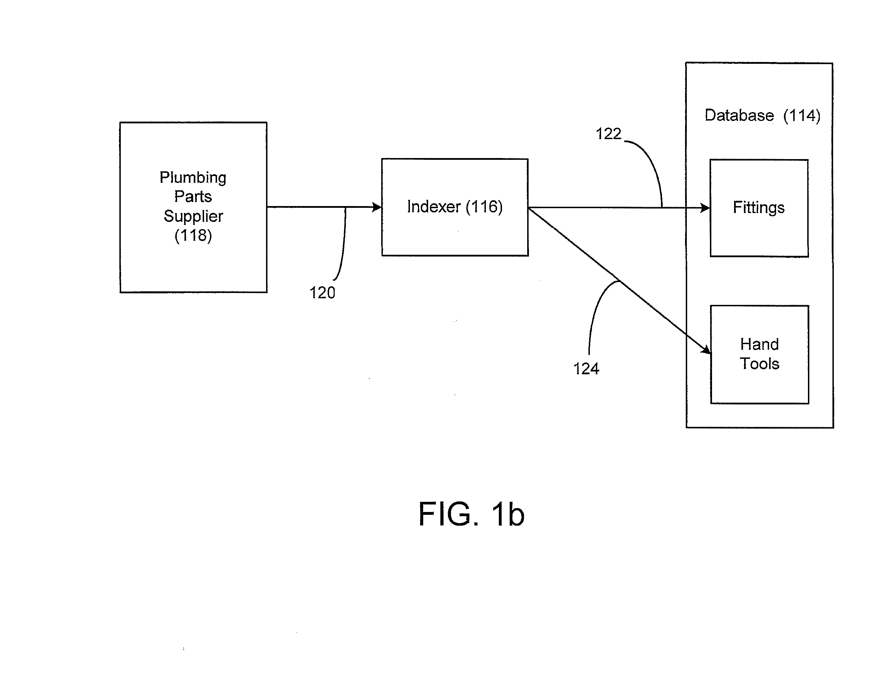

FIG. 1b illustrates one embodiment of an image data indexing method of the invention. A plumbing parts supplier 118, which may be a retailer or wholesaler of plumbing supplies, may provide part image data and associated information 120 to indexer 116. Rather than supplier 118 providing image data 120 actively, in another embodiment, a centralized web-based crawler (not shown) may search the web sites of plumbing suppliers for image data, may capture the image data and associated information, and may send the captured image data and associated information to indexer 116. Indexer 116 may then categorize the images into visual families that are stored in database 114. In the specific example illustrated in FIG. 1b, the image data is divided into fittings image data 122 and hand tools image data 124, and is stored as such in database 114.

Other information about the components parts stored in database 114 may include features that a user may not be able to ascertain visually, such as the age, price, location, and/or material composition of the part. This non-visual information may be manually entered into database 114, or entered by some method other than analyzing the image data associated with the part.

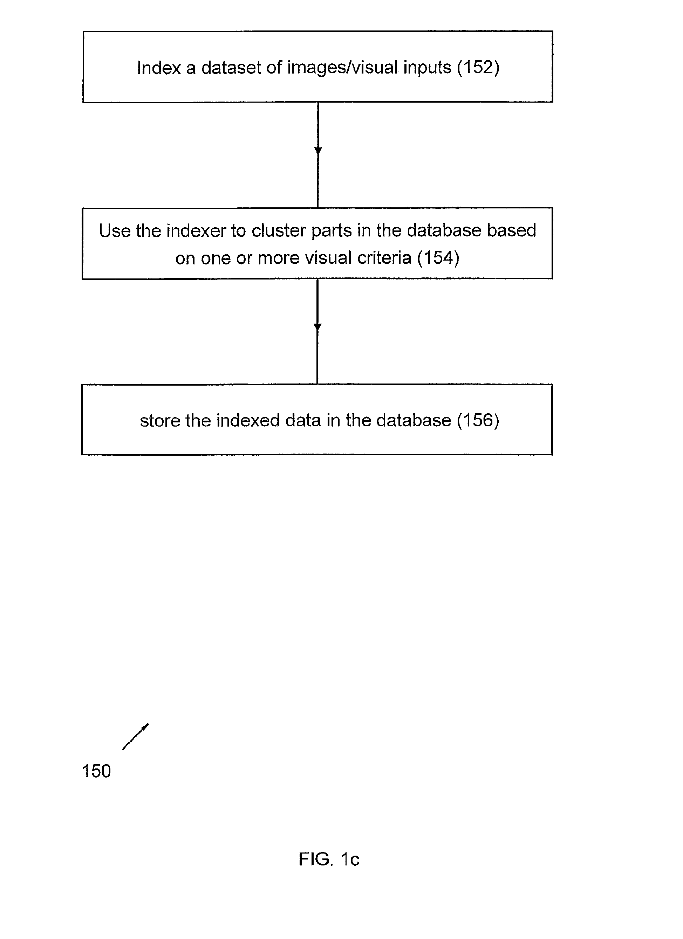

One embodiment of a search method 150 of the present invention is illustrated in FIG. 1c. In a first step 152, a dataset of images/visual inputs are indexed. For example, the images/visual input may be indexed in database 114 using indexer 116. The present invention may be particularly suitable when used in conjunction with a dataset of hundreds of thousands of images/visual inputs.

In a second step 154, indexer 116 may cluster parts in database 114 based on one or more visual criteria. For example, indexer 116 may cluster the images/visual input based on one or more visual criteria. A cluster may be described herein as a group of parts having a common feature or characteristic, which may be a visual feature or characteristic. Indexer 116 may also create sub-clusters for a given cluster. Indexer 116 may create the sub-clusters based on one or more visual criteria which may or may not be the same visual criteria on which the clustering was based. Alternatively, indexer 116 may create the sub-clusters on a non-visual-attribute-driven basis.

Edge detection may be used to capture the image boundary. For example, the image boundary may correspond to an outline or profile of the object in the image. The image boundary may then be used as the input for the visual clustering. That is, the visual clustering may be performed based upon a profile shape or outline shape of the parts. Alternatively, instead of clustering based on an outline from a single two-dimensional image, clustering may be performed based on the three-dimensional shape of the object. For example, for each part, the profile or outline shape from at least two different viewing angles may be used to determine or model the three-dimensional shape for each part. Regardless of whether clustering is performed based on two- or three-dimensional shape, the feature vectors from the image boundary edges may be used to create histograms. The histograms may then be matched to similar histograms of other images. Thus, the two parts associated with the two sets of histograms may be deemed to be visually similar to each other, and thereby clustering may be performed.

In a third step 156, the indexed data may be stored in the database. For example, the newly created clustering and sub-clustering data may be stored in database 114. The newly created clustering and sub-clustering data may identify which parts are clustered and sub-clustered with which other parts, and may identify the criteria, characteristics and/or features on which the clustering and sub-clustering is based.

The visual navigation that is enabled by the invention, such as in a mobile application, is novel in that the visual navigation may use the visual clustering database to help the user easily navigate intuitively. For example, the user may look through parts in order to find them, similarly to the way the user would find a desired part if he were present with a collection of physical parts in-person. However, the inventive method improves upon the natural, visual way of searching for desired parts by clustering parts on the basis of the visual similarity of the parts, thereby making the parts easier for the user to sort through. Although the clusters may have text descriptions, the indexer may automatically place parts in the clusters based on their visual characteristics, without being provided with a text description for the part by an external source (e.g., the person who requests that the part be added to the database). The inventive method may avoid the complicated way that attribute driven approaches work, wherein the user is often asked to select options and then the search narrows the results and presents them to the user. In contrast, the inventive method may enable navigation to the right set of results by use of the clusters which may be visually organized.

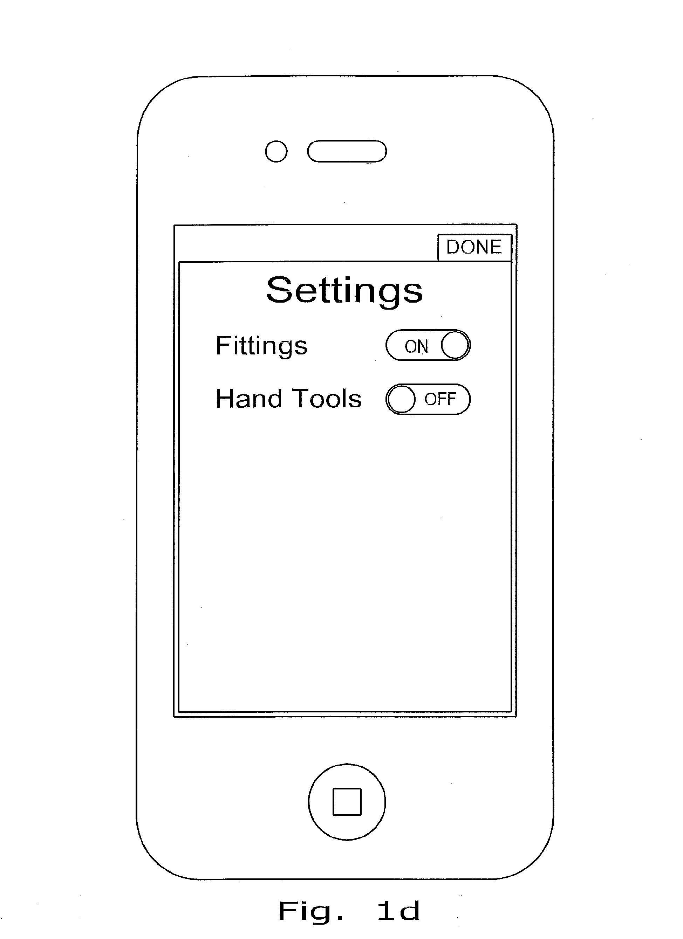

FIGS. 1d-6 illustrate screenshots of a mobile application incorporating the invention on a mobile telecommunication device 102 in the form of a smartphone. "Fittings" (as are used in plumbing) is the category or visual family of hardware whose images are used in the application as an example. More particularly, as shown in FIG. 1d, the display of the smartphone may present the user with a choice between two types of parts that are present in the database, i.e., fittings and hand tools. As also shown in FIG. 1d, the user has selected "Fittings" as the category of parts, or visual family, that he would like to search through.

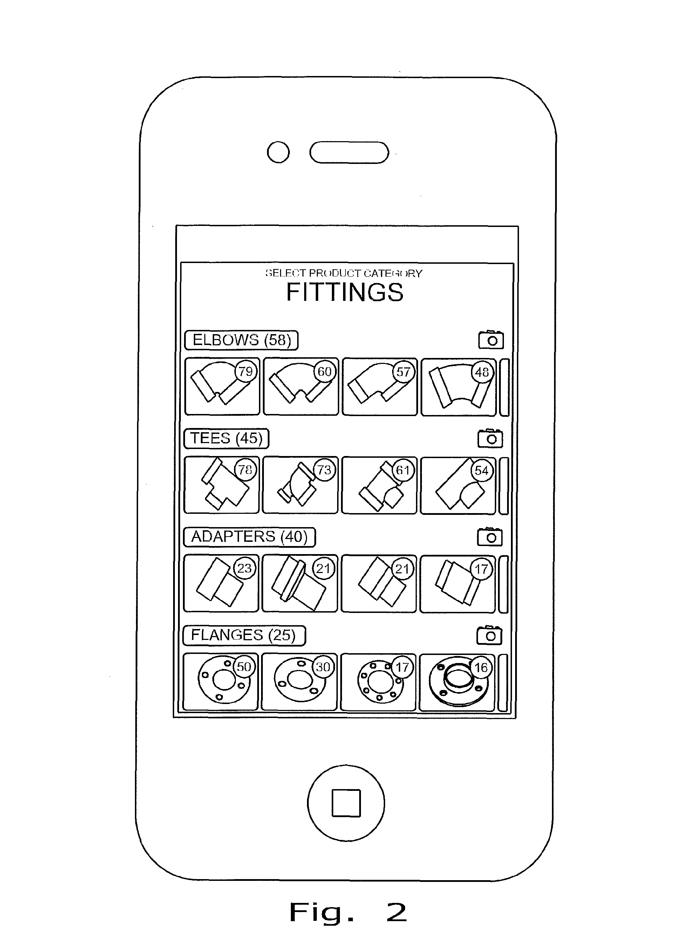

FIG. 2 illustrates the display after the user has entered his selection of "Fittings" as the part category. The display of FIG. 2 shows the cluster of categories organized based on shape, such as elbow shape, tee shape, adapter shape, and flange shape, etc. The first level part group is "Elbows", the second level part group is "Tees", etc. The number displayed next to each category group name represents the number of visual clusters in the group, although only four visual clusters are visible in FIG. 2 for each category group. For example, there are fifty-eight visual clusters in the "Elbows" category group, forty-five visual clusters in the "Tees" category group, etc. Superimposed over each image of a part representing a visual cluster is the number of stock-keeping units (SKUs) in that particular visual cluster in the database. For example, there are seventy-nine SKUs in the cluster represented by the left-most image in the "Elbows" category group, and there are seventeen SKUs in the cluster represented by the right-most image in the "Adapters" category group. The user may view SKU that are not currently displayed by touching one of the images and dragging the image to the left in order to make space for additional images to enter the display from the right.

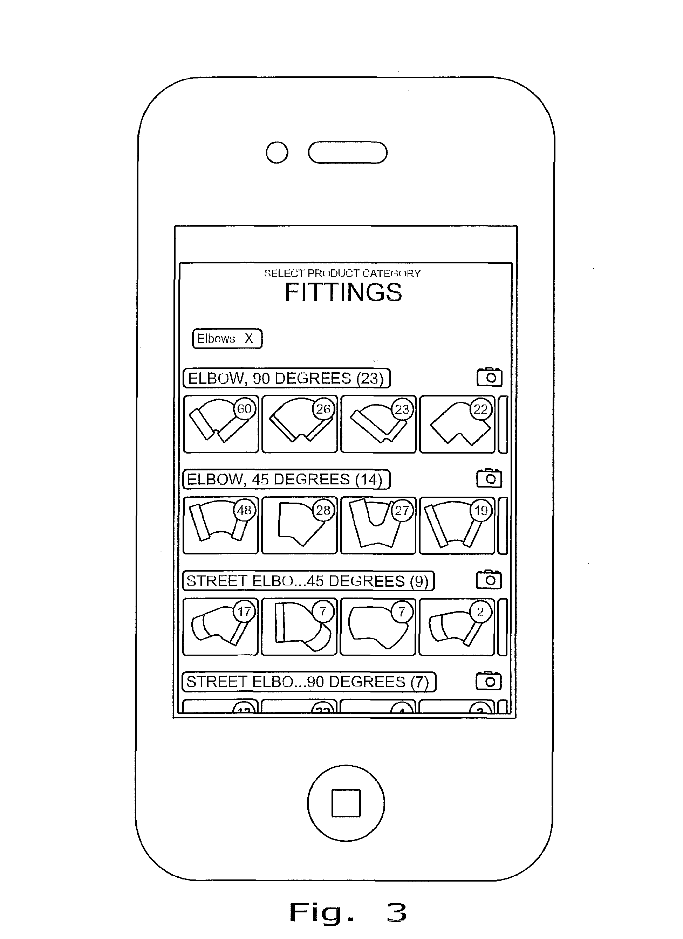

A user may select a category group by tapping his finger on any image or text associated with the category group, for example. FIG. 3 illustrates the display of the smartphone after the user has selected the "Elbows" part category group. After the "Elbows" part category group, or "cluster", has been selected by the user, at least one sub-cluster of the "Elbows" cluster is displayed to the user. In this particular example, the next cluster group that is displayed is the sub-cluster of angles. Accordingly, the sub-clusters of ninety degree elbows and forty-five degree elbows are displayed, in this case separately for "elbows" and "street elbows". The sub-clusters of "Elbows, 90 Degrees", "Elbows, 45 Degrees", "Street Elbows, 45 Degrees", and "Street Elbows, 90 Degrees" may serve to further refine the list of parts in the "Elbows" cluster.

The camera icon may be clicked on to perform a visual search and without introducing any further clusters. For example, the user may touch the camera icon next to "Elbows, 90 Degrees" in order to view the images of all twenty-three 90 Degree Elbow SKUs without any further breakdown of the cluster. The images associated with each SKU may be from various angles or viewpoints in order to provide the user with three-dimensional information about the SKU. For example, in addition to the front view shown in FIG. 3, a side view and a top view of each part may be provided to the viewer.

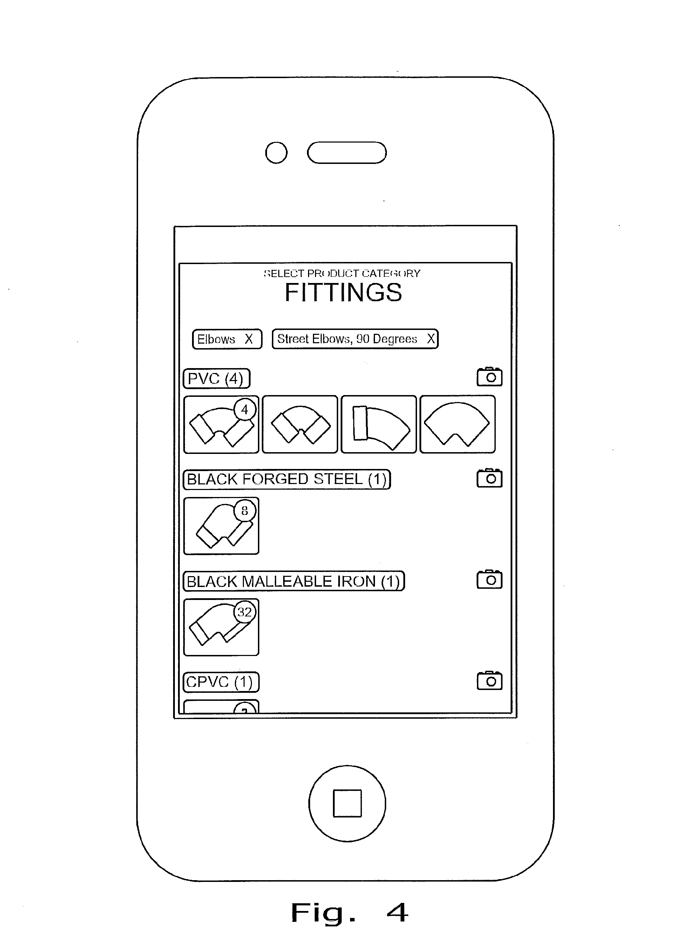

The user may select one of the above-described sub-clusters in order to specify an elbow type and angle combination. After a selection has made of the elbow type and angle, the next sub-cluster, or the sub-sub-cluster, of parts is displayed. In this example, the next logical cluster group is not visual/shape-based (e.g., a feature that can be displayed and seen), but rather is based on a non-visual attribute (e.g., conveyed with only a textual description), which happens in this case to be the material composition of the parts. FIG. 4 illustrates the display screen after the user has selected the sub-category of "Street Elbows, 90 Degrees". After the type of elbow has been selected by the user (e.g., street elbow, 90 degrees), the next sub-sub-cluster group that is displayed is the sub-sub-cluster of material composition. Accordingly, the sub-sub-clusters of polyvinyl chloride (PVC), Black Forged Steel, Black Malleable Iron, and chlorinated polyvinyl chloride (CPVC) are displayed.

Groups may define the characteristics of sub-visual clusters. As shown in FIG. 4, for example, there are eight SKUs for ninety degree street elbows constructed of black forged steel.

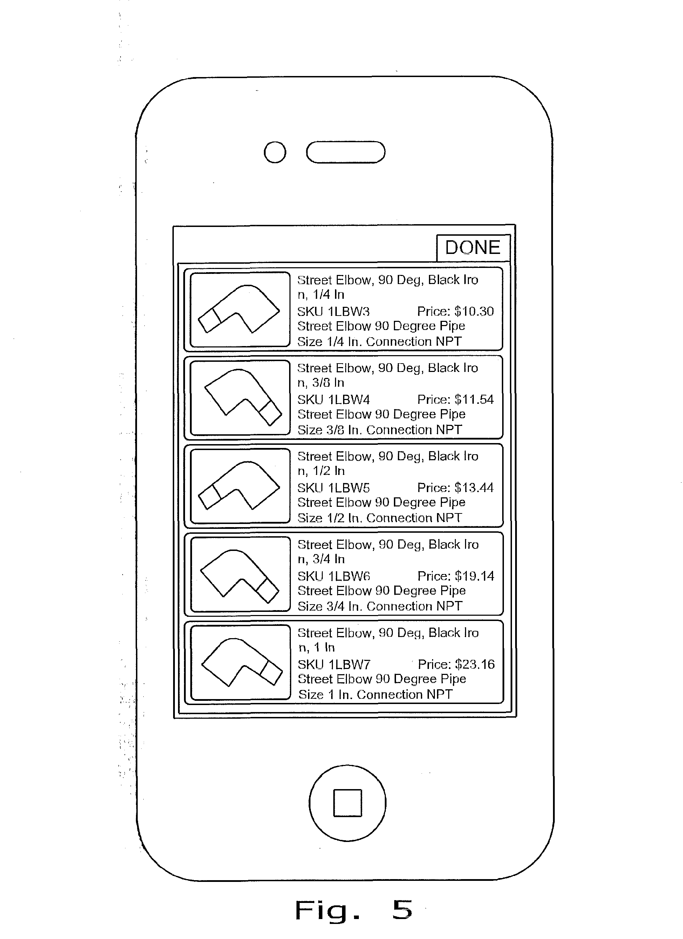

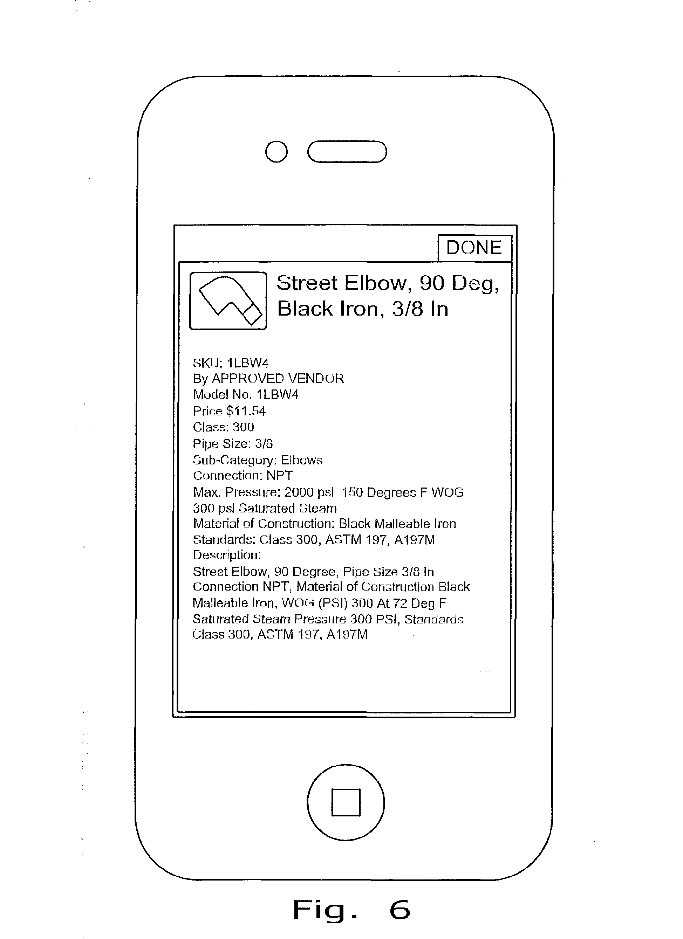

FIG. 5 illustrates the display after the user has selected the black malleable iron sub-sub cluster. Five of the thirty-two SKUs are displayed on the screen. FIG. 6 illustrates the display after the user has selected the 3/8 inch black iron 90 degree street elbow, which represents a single SKU. An increased level of textual detailed is displayed in FIG. 6 for this 3/8 inch SKU as compared to FIG. 5.

Although the present invention has been described above as being applied to parts, it is to be understood that the invention may also be applied to products including multiple parts. For example, the invention may be applied to multiple-part products such as televisions, automobiles, etc.

While this invention has been described as having an exemplary design, the present invention may be further modified within the spirit and scope of this disclosure. This application is therefore intended to cover any variations, uses, or adaptations of the invention using its general principles.

## Claims

1. A method of visually clustering a database of component parts, comprising the steps of:
indexing a set of image data associated with the component parts;
storing the indexed image data in the database; and
clustering the indexed image data dependent upon a visual criterion.

2. The method of claim 1 wherein the clustering step includes automatically assigning the component parts to corresponding clusters based on the indexed image data and on the visual criterion, the clusters including a plurality of visual families.

3. The method of claim 1 comprising the further step of displaying images based on the indexed image data.

4. The method of claim 3, wherein the clustering step includes organizing the images in clusters of the component parts.

5. The method of claim 4 wherein each said cluster includes a plurality of sub-clusters of the component parts, the sub-clusters being formed based on visual characteristics of the component parts.

6. The method of claim 5 wherein each said sub-cluster includes a plurality of sub-sub-clusters of the component parts, the sub-sub-clusters being formed based on textual descriptions of the component parts.

7. The method of claim 4 wherein a respective number is displayed within each said image, each said number indicating how many stock-keeping units are included in a corresponding cluster associated with the image.

8. The method of claim 1 wherein the clustering step includes clustering the indexed image data into visual families dependent upon a visual criterion, the method comprising the further step of displaying images based on the indexed image data, the images being displayed in clusters of the component parts based on the clustering step.

9. The method of claim 8 wherein the clustering step includes automatically assigning the component parts to corresponding clusters based on the indexed image data and on the visual criterion.

10. The method of claim 1 further comprising displaying images based on the indexed image data, the images being displayed in clusters of the component parts based on the clustering step, each said cluster including a plurality of sub-clusters of the component parts, a respective number being displayed in association with each said cluster, each said number indicating how many said sub-clusters are included in each said associated cluster.

11. The method of claim 10, comprising the further step of storing the indexed image data in a database.

12. The method of claim 10 wherein the clustering step includes automatically assigning the component parts to corresponding clusters based on the indexed image data and on the visual criterion.

13. The method of claim 10 comprising the further step of enabling a user to view every component part in a selected said cluster without said cluster being organized in sub-clusters, the enabling being in response to the user selecting said cluster.

14. The method of claim 10 wherein each said sub-cluster includes a plurality of sub-sub-clusters of the component parts, the sub-sub-clusters being formed based on textual descriptions of the component parts.

15. The method of claim 10 wherein a respective number is displayed within each said image, each said number indicating how many stock-keeping units are included in a corresponding cluster associated with the image.
